# EUROPEAN PATENT APPLICATION

(11) **EP 3 321 521 A1**
(43) Date of publication of application: **16.05.2018**
(21) Application number: 15898403.9
(22) Date of filing: 29.10.2015
(51) Int. Cl.: F16B 7/04

(54) **RELEASABLE COUPLING SYSTEM**

(30) Priority: 10.07.2015 US 201562190868 P
(71) Applicant: Garza-Montemayor, José-Guadalupe, 66050 General Escobedo, Nuevo León (MX); Garza-Montemayor, Jorge-Eugenio, 66050 General Escobedo, Nuevo León (MX)
(72) Inventor: Garza-Montemayor, José-Guadalupe, 66050 General Escobedo, Nuevo León (MX); Garza-Montemayor, Jorge-Eugenio, 66050 General Escobedo, Nuevo León (MX)
(74) Representative: Wynne-Jones, Lainé and James LLP
(86) International application number: PCT/MX2015/000141
(87) International publication number: WO 2017/010860

(57) **Abstract**

A snap-engagement linear releasable coupling system to join at least one male tubular member to one female tubular member receiving the male tubular member therein, wherein the female tubular member has means for pressing the retaining tab or tabs of the male coupling member and carrying out the separation of both coupling members.

## Description

### BACKGROUND OF THE INVENTION

### A. FIELD OF THE INVENTION.

The present invention relates to snap-engagement coupling systems that allow the attachment and instantaneous securing of several coupling members or pieces to each other, wherein one or more retaining tabs of one of the male coupling tubular members or pieces temporarily flex to enter into guides or a receiving cavity of another female coupling member or piece, wherein the retaining tabs engage; and more particularly with a snap-engagement linear coupling system to join at least one male tubular member to one female tubular member receiving the male tubular member therein, wherein the female tubular member has means for pressing the retaining tab or tabs of the male coupling member and carrying out the separation of both coupling members.

### B. DESCRIPTION OF THE RELATED ART.

During the last years it has been seen that for the transport of furniture, shelves, household, office, hospital, school accessories, etc. the best thing is the shipment of disassembled pieces to have low shipment costs but this has led the user of these components to assemble the pieces with joining elements such as screws and nuts, assembly supports, adhesives or glues and/or use merger through temperature systems, tools and instructions for the assembly that in many cases are complex and need a qualified person to carry out this task.

In order to be able to solve the aforementioned problems, a great variety of snap joint systems have been developed which are commonly used to instantaneously join and secure with each other a variety of tubular coupling members, especially of plastic materials, since the plastic material is especially suitable due to its flexibility, which allows the engaging protrusions of the snap-engagement attachment to be flexed temporarily to be inserted into an engaging receptacle of another tubular member.

Although the releasable coupling systems existing in the art completely facilitate the assembly of a great variety of products, they do not allow their disassembly, or they do not provide a way to disassemble them in an easy and fast way, which is very useful for products of portable nature which need to be transported from one place to another.

Some coupling systems that allow the decoupling of the coupling members are described in various prior art documents.

For example, the US patent No. 832,284 describes unlocking means, but these act on hook-type securing members to secure non-tubular members which do not connect linearly.

On the other hand, patent EP1319882A2 does show tubular members linearly coupled with detachable securing means, but the detachable securing members are hook-type and do not include unlocking means, since the unlocking is obtained by directly pressing the hook member.

US patents 5,575,399, 5,931,514 and 8,648,264 disclose snap joint detachable securing means which include means for accessing the retaining tab to press and unlock it from the female means, but do not disclose unlocking means for pressing the retaining tab. In addition, said securing means are used in non-tubular members, which are connected non-linearly.

In view of the need to assemble portable or non-portable products which have to be assembled and disassembled in a quick and easy manner, and involving coupling members that join linearly, the applicant developed a snap-engagement linear releasable coupling system to join at least one male tubular member to one female tubular member receiving the male tubular member therein, wherein the female tubular member has means for pressing the retaining tab or tabs of the male coupling member and carrying out the separation of both coupling members.

The releasable coupling system of the present invention can be incorporated, for example, into portable or non-portable products, such as, for example, tables composed of a surface and four legs, in which the time necessary for the assembly and disassembly of the table can be reduced up to 90% compared to traditional assembly methods. If traditional methods of assembly are used, a user may take about 30 minutes to assemble a table compared to about 2 to 4 minutes if the releasable coupling system of the present invention is used, incorporating it into each leg of the table and in the corners of it, where each leg is coupled.

### SUMMARY OF THE INVENTION.

It is therefore a main object of the present invention to provide a snap-engagement linear releasable coupling system to join at least one male tubular member to one female tubular member receiving the male tubular member therein, wherein the female tubular member has means for pressing the retaining tab or tabs of the male coupling member and carrying out the separation of both coupling members.

It is a further object of the present invention to provide a releasable coupling system of the nature described above, which can be incorporated for example into portable or non-portable products, such as composite tables.

It is still a main object of the present invention to provide a releasable coupling system of the nature described above by which the times of assembly and disassembly of a product having incorporated the coupling system of the present invention can be reduced by up to 90%.

These and other objectives and advantages of the releasable coupling system of the present invention will be made clear to those with ordinary skill in the art, from the following detailed description of the embodiments of the invention, which will be made with reference to the attached drawings and which will fall within the true scope of the present invention.

### BRIEF DESCRIPTION OF THE DRAWINGS.

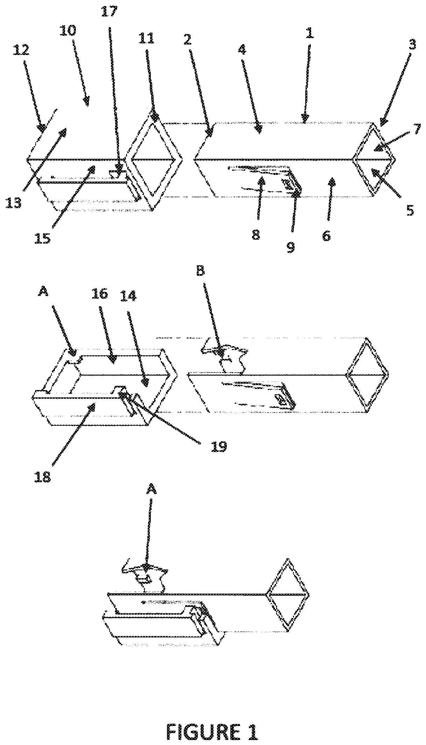

Figure 1 comprises three perspective views showing a first embodiment of the releasable coupling system of the present invention with quadrangular cross section tubular members, wherein a first view shows both coupling members disassembled, a second view shows both coupling members disassembled with some transparent portions showing the interior of certain portions of both members and a third view showing both coupling members assembled with some transparent portions showing the interior of certain portions of both members.

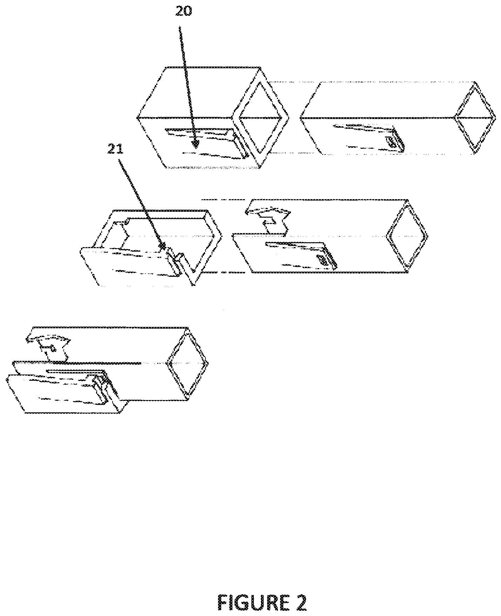

Figure 2 comprises three perspective views showing a second embodiment of the releasable coupling system of the present invention with quadrangular cross section tubular members, wherein a first view shows both coupling members disassembled, a second view shows both coupling members disassembled with some transparent portions showing the interior of certain portions of both members and a third view showing both coupling members assembled with some transparent portions showing the interior of certain portions of both members.

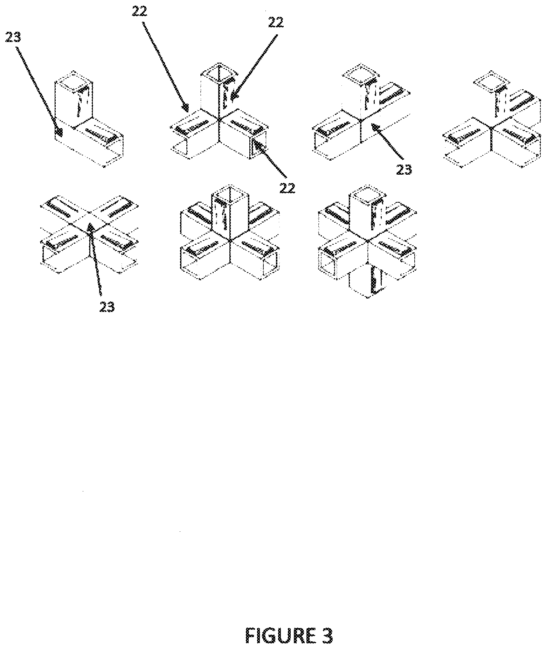

Figure 3 comprises seven perspective views of two or more female coupling members joined to a connecting element by a first end, thereby forming connection centers to connect two or more male coupling members at right angles.

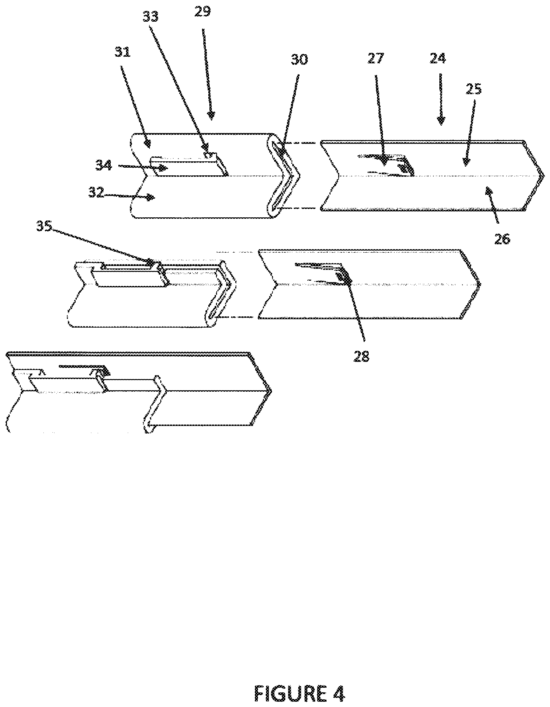

Figure 4 comprises three perspective views showing a third embodiment of the releasable coupling system of the present invention with flat "L" shaped cross section tubular members, wherein a first view shows both coupling members disassembled, a second view shows both coupling members disassembled with some transparent portions showing the interior of certain portions of both members and a third view showing both coupling members assembled with some transparent portions showing the interior of certain portions of both members.

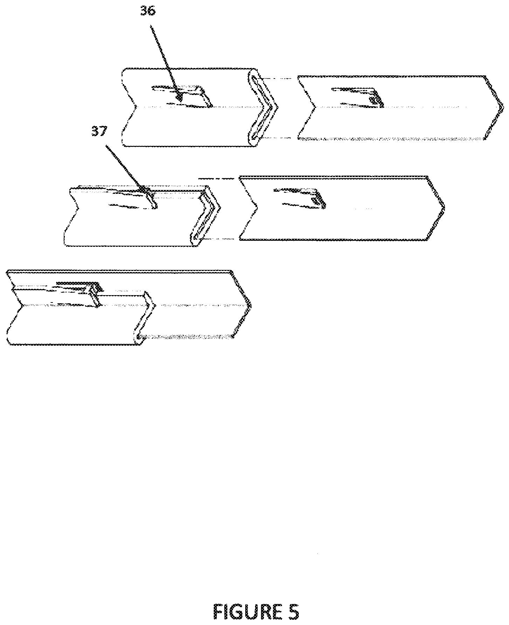

Figure 5 comprises three perspective views showing a fourth embodiment of the releasable coupling system of the present invention with flat "L" shaped cross section tubular members, wherein a first view shows both coupling members disassembled, a second view shows both coupling members disassembled with some transparent portions showing the interior of certain portions of both members and a third view showing both coupling members assembled with some transparent portions showing the interior of certain portions of both members.

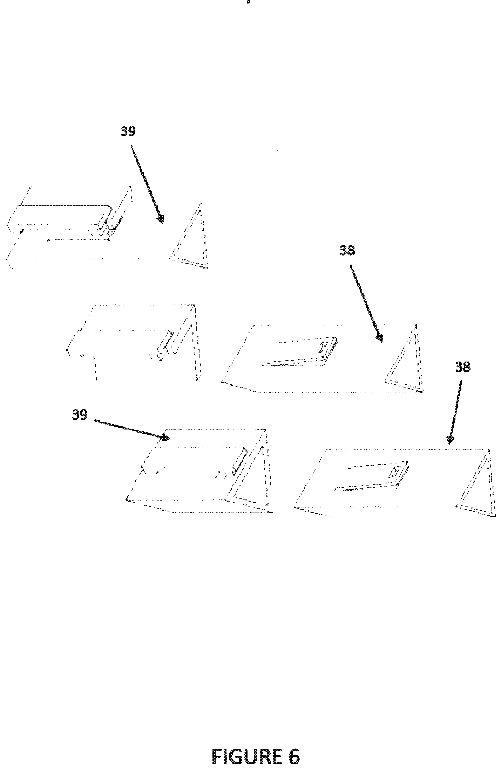

Figure 6 comprises three perspective views showing a fifth embodiment of the releasable coupling system of the present invention with triangular-shaped flat cross section tubular members, wherein a first view shows both coupling members assembled with some transparent portions showing the interior of certain portions of both members, a second view and a third view showing both coupling members disassembled with some transparent portions showing the interior of certain portions of both members.

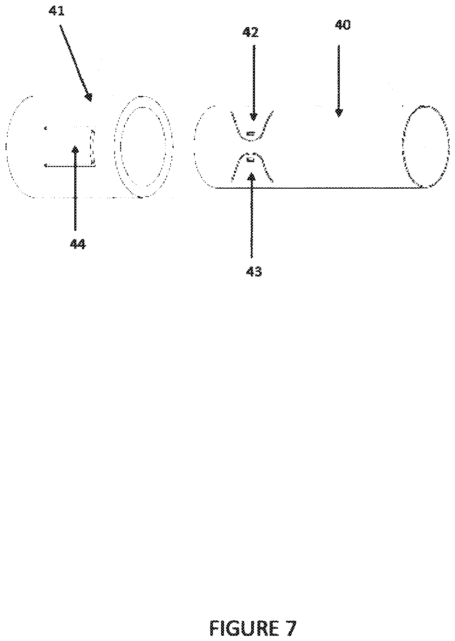

Figure 7 shows a perspective view of a sixth embodiment of the releasable coupling system of the present invention with circular-shaped cross section tubular members disassembled.

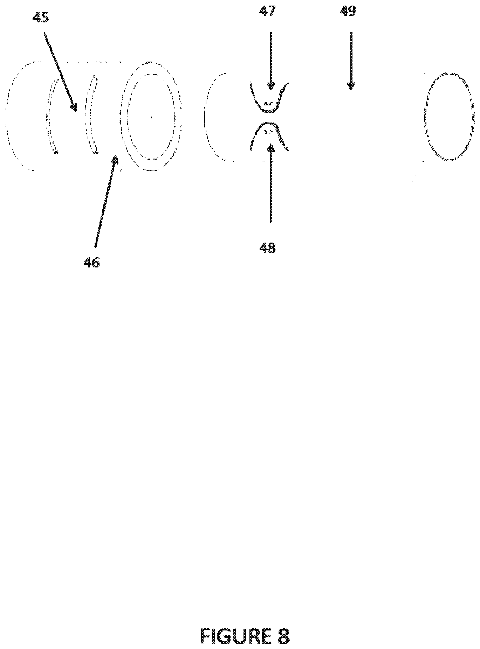

Figure 8 shows a perspective view of a seventh embodiment of the releasable coupling system of the present invention with circular-shaped cross section tubular members disassembled.

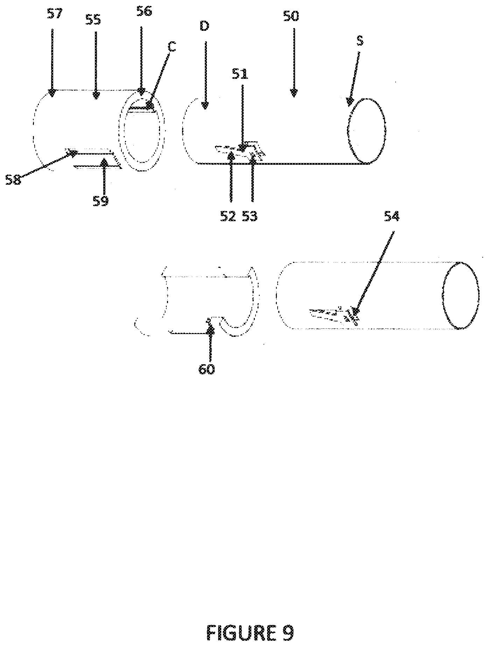

Figure 9 comprises two perspective views showing an eighth embodiment of the releasable coupling system of the present invention with triangular-shaped flat cross section tubular members, wherein a first view shows both coupling members disassembled and a second view shows both coupling members disassembled with some transparent portions showing the interior of certain portions of the female coupling member.

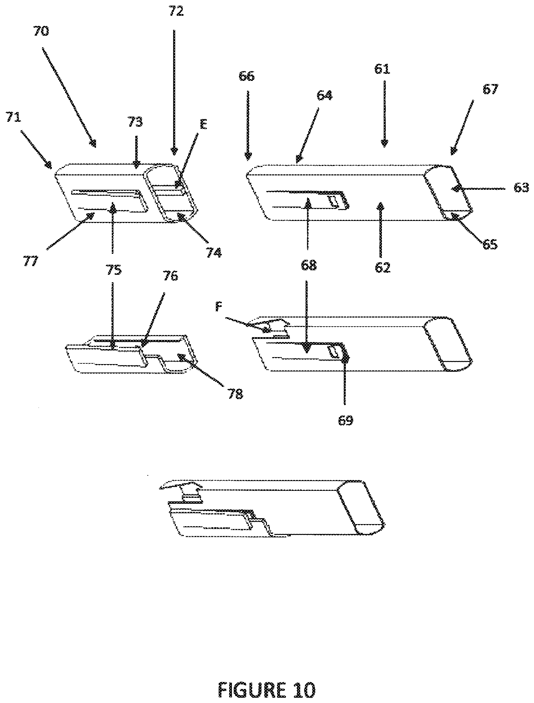

Figure 10 comprises three perspective views showing a ninth embodiment of the releasable coupling system of the present invention with oval-shaped cross section tubular members, wherein a first view shows both coupling members disassembled, a second view shows both coupling members disassembled with some transparent portions showing the interior of certain portions of both members and a third view showing both coupling members assembled with some transparent portions showing the interior of certain portions of both members.

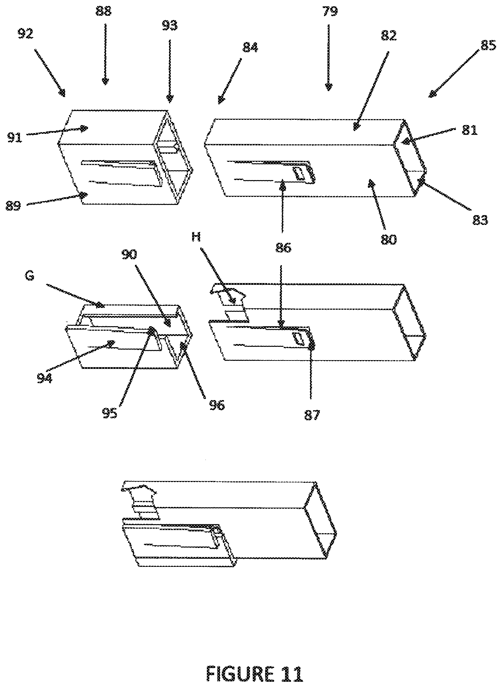

Figure 11 comprises three perspective views showing a tenth embodiment of the releasable coupling system of the present invention with rectangular-shaped cross section tubular members, wherein a first view shows both coupling members disassembled, a second view shows both coupling members disassembled with some transparent portions showing the interior of certain portions of both members and a third view showing both coupling members assembled with some transparent portions showing the interior of certain portions of both coupling members.

### DETAILED DESCRIPTION OF THE PREFERRED EMBODIMENTS.

The releasable coupling system of the present invention will now be described in relation to a general embodiment thereof, comprising:
a male coupling member having: at least one wall having a coupling surface; one or more retaining tabs each formed on the coupling surface of the at least one wall, each retaining tab raised at an angle regarding the surface of the coupling surface and having a retaining edge;
a female coupling member having: at least one wall; means for receiving and coupling the coupling surface of the at least one wall of the male coupling member; at least one recess or space formed in the at least one wall, each having a contact edge; and one or more means for exerting a force on a retaining tab associated with each retaining tab, each means for exerting a force on a retaining tab depending on the at least one wall of the female coupling member and located on a respective recess or space;
wherein the male coupling member is received by the female coupling member in the means for receiving and coupling the coupling surface of the at least one wall of the male coupling member;
wherein each retaining tab of the male coupling member passes momentarily in a tight and flexed manner, below the at least one wall of the female coupling member, until the retaining edge of said tab reaches the contact edge of a recess or space of the female coupling member and said retaining tab returns to its normal position without flexing in such a way that the retaining edge is retained by the contact edge of the recess or space, thereby joining the male coupling member to the female coupling member;
wherein each means for exerting a force on the retaining tab, momentarily allows pushing and flexing a corresponding retaining tab, thereby allowing said retaining tab to pass below the at least one wall of the female coupling member and to decouple the male coupling member from the female coupling member when pulled.

In a first embodiment of the present invention, shown in figure 1, the releasable coupling system of the present invention comprises:
a male coupling tubular member (1) having a quadrangular-shaped cross section and a longitudinal axis, comprising: a first end (2) a second end (3); a first side wall (4); a second side wall (5); a first longitudinal wall (6) and a second longitudinal wall (7); a retaining tab (8) formed in the first longitudinal wall (6) close to its first end (2) and oriented towards the second end of the male coupling tubular member (1), said retaining tab (8) having a longitudinal axis which is oriented parallel to the longitudinal axis of the tubular coupling member (1), and a retaining edge (9) and wherein said retaining tab (8) is raised at an angle directed upwardly from the surface of the first longitudinal wall (6). Said tubular coupling member further including a guiding groove (B) which starts at the first end (2) of the second longitudinal wall (7);
a female coupling tubular member (10) having a quadrangular-shaped cross section and a longitudinal axis, comprising: a first open end (11); a second closed end (12); a first side wall (13) and a second side wall (14); a first longitudinal wall (15); a second longitudinal wall (16); a rectangular opening (17) formed in the first longitudinal wall (15) and means for pressing the retaining tab (8) of the male coupling member (1) comprising a rectangular clip-shaped member (18) which directly depends on the first longitudinal wall (15), having a longitudinal axis parallel to the longitudinal axis of the female coupling member (10), said rectangular clip (18) having an upper surface and a lower surface, wherein said lower surface has a protrusion (19) located on the rectangular opening (17) which can pass through said rectangular opening (17), said female coupling tubular member (10) having a guide protrusion (A) which starts at the second closed end (12) of the female coupling tubular member (10) having a length equivalent to the guiding groove (B);
wherein the cross-sectional size of the female coupling tubular member (10) allows the male coupling tubular member (1) to be linearly and tightly received within the female coupling tubular member (19);
wherein the male coupling tubular member (1) upon being received inside the female coupling tubular member (10) through its open end (11), the retaining tab (8) momentarily flexes until the retaining edge (9) reaches the edge of the rectangular opening (17) of the female coupling tubular member (10) thus allowing the retaining tab (8) to return to its normal position in such a way that it is retained by the edge of the rectangular opening (17), thus completing the attachment and securing of both members.
wherein the guide protrusion (A) of the tubular coupling member is received in the guiding groove (B), thereby ensuring that the tubular coupling members are joined in a correct arrangement, with the retaining tab (8) correctly located regarding the rectangular opening (17) and not allowing the attachment of the tubular coupling members in another arrangement when bumping one edge of a wall of the first end (2) of the male coupling tubular member (1) with said guiding edge (A).
wherein the rectangular clip (18) of the means for pressing the retaining tab (8) allows exerting a force towards the upper surface of the retaining tab (8) by means of the protrusion (19), which pushes the retaining tab (8) to momentarily flex it, allowing the retaining edge (9) to separate from the edge of the rectangular opening (17), and thus pulling the male coupling tubular member (1) carrying out the separation of the male coupling tubular member (1) outside the female coupling tubular member (10).

Figure 2 shows a second embodiment which is similar to the first embodiment, except that the means for pressing the retaining tab (8) comprise a tab (20) formed in the first longitudinal wall (15) of the female coupling tubular member (10), having a longitudinal axis located parallel to the longitudinal axis of the female coupling tubular member (10), said tab (20) being longitudinally oriented towards the open end (11) and having an upper surface and a lower surface, wherein said lower surface has a protrusion (21) located at the end of said tab (20) which coincides with the end of the retaining tab (8) of the male coupling tubular member (1) when both are correctly coupled.

In other embodiments such as that shown in figure 3, one or more female coupling tubular members (22) can be joined to a central connecting element (23) to form a "connection center" for one or more male coupling members. In such an embodiment, each female coupling tubular member (22) has a length necessary to securely and correctly receive a corresponding male coupling member. The open end of the female coupling tubular member (22) allows the insertion of the male coupling tubular member and the closed end of the female coupling member (22) allows to be joined to other female coupling members (22) at any angle by means of the central connecting element (23).

Such an embodiment can be useful, for example, when applied to products that require joining several male coupling members, as in the case of a shelf or bookshelf.

Similarly, one or more male coupling tubular members can be joined to a central connecting element to form a "connection center" for one or more female coupling tubular members.

Although the first embodiment shown in figure 1 describes that the cross sections of the coupling members are quadrangular-shaped, it should be understood that both coupling members can have any shape in the corresponding cross section (round, triangular, rectangular, flat, oval-flat, elliptical, angular profiles, etc.) and can be made of any type of material that is suitable.

Thus, there may be embodiments wherein the coupling members can be completely flat, in which case the male coupling member can be received in guides formed in the female coupling member.

Moreover, although it has been described that the means for pushing the retaining tab (8) comprise a rectangular clip-shaped member (18) or a tab (20) formed in a wall of the tubular female coupling member, it should be understood that said means for pushing the retaining tab (8) can comprise any type of means for pushing or pressing the retaining tab (8) which depend on one of the walls of the female coupling tubular member and which are located in such a way as to allow that said means for pushing or pressing the retaining tab (8) can push said retaining tab. Likewise, the means for pushing or pressing the retaining tab (8) can be designed to allow a user to exert the pressure manually or using automated means for pushing, such as: engines, cylinders, magnetic systems, etc.

The tubular coupling members can have any element depending on its second end, such as a coupling member for a tubular profile, a coupling member for open profile or a central connecting element such as that described above or any other coupling member with any shape.

From the above description, it should be understood that the male coupling tubular member and the female coupling tubular member are coupled in a linear fashion, however, the elements joined to or depending on the second end of the tubular coupling members can be located at any angle or arrangement regarding the tubular coupling members.

It should be understood that the description of the general embodiment of the invention provides a sufficient scope to include other embodiments of the invention, such as those shown in figures 4 to 11 which are described below.

Figure 4, shows a third embodiment of the invention, comprising:
an "L" angle profile shaped male coupling member (24), having: a longitudinal axis, a first rectangular portion (25) having a first and a second surface, a second rectangular portion (26) having a first and a second surface, both rectangular portions being arranged at a 90° angle among them, wherein the first rectangular portion (25) has a retaining tab (27) having a retaining edge (28), said retaining tab (27) formed in said first rectangular portion (25) and being located close to an end of said rectangular portion (25), raised at an angle on the first surface of the first rectangular portion (25). Said retaining tab (27) having a longitudinal axis parallel to the longitudinal axis of the male coupling member (24).
an "L" angle profile shaped male coupling member (29), having: a longitudinal axis, an "L" shaped cavity (30) for receiving a portion or all of the "L" angle profile shaped male coupling member (24) and having a first rectangular portion (31) having a first and a second surface, a second rectangular portion (32) having a first and a second surface; a groove (33) formed in the first surface of the first rectangular portion (31), and means for pushing the retaining tab (27) of the male coupling member (24), comprising a rectangular clip-shaped member (34) which depends on the first surface of the first rectangular portion (31), having a longitudinal axis parallel to the longitudinal axis of the female coupling member (29), said rectangular clip-shaped member (34) having an upper surface and a lower surface, said lower surface having a protrusion (35) located directly on the groove (33) and capable of passing through said groove (33);
wherein the male coupling member (24) upon being received within the cavity (30) of the female coupling member (29), the retaining tab (27) of the male coupling member (29) passes tightly below the first surface of the first rectangular portion (31) of the female element (29) momentarily flexing until the retaining edge (28) of the retaining tab (27) reaches the edge of the groove (33) of the female coupling member (29) and said retaining tab (27) returns to its normal position, in such a way that the retaining edge (28) makes contact with the edge of the recessed or hollow area (33) of the female element thus completing the attachment of the male coupling member (24) with the female coupling member (29);
wherein the protrusion (35) of the rectangular clip-shaped member (34) of the means for pressing the retaining tab (27) allows exerting a force towards the upper surface of the retaining tab (27) by means of the protrusion (35), which pushes the retaining tab (27) to momentarily flex it, allowing the retaining edge (28) to separate from the edge of the groove (33), and thus pulling the male coupling member (24) carrying out the separation of the male coupling member (24) outside the female coupling member (29).

Figure 5 shows a fourth embodiment similar to the third embodiment shown in Figure 4, with the difference that the means for pushing the retaining tab (27) of the male coupling member (24) comprise a flange (36) formed in the first surface of the first rectangular portion (31) of the female coupling member (29), said flange (36) having a protrusion (37) in its lower surface, said protrusion (37) located in one end of said flange (36) in such a way that it coincides with the end of the retaining tab (27) of the male coupling member (24) when correctly inserted in the female coupling member (29). Said flange (36) having a longitudinal axis parallel to the longitudinal axis of the female coupling member (29) and directed towards the "L" shaped cavity (30).

Figure 6 shows a fifth embodiment of the invention similar to the first embodiment shown in figure 1, with the difference that the male coupling tubular member (38) and the female coupling tubular member (39) have a triangular-shaped cross section.

Figure 7 shows a sixth embodiment of the invention similar to the second embodiment of the invention shown in figure 2, but with the following differences:
the male coupling tubular member (40) has a circular-shaped cross section;
the female coupling tubular member (41) has a circular-shaped cross section;
the male coupling tubular member (41) has a first retaining tab (42) and a second retaining tab (43), both cross-sectionally oriented regarding a longitudinal axis of the male coupling member (40) in such a way that their retaining edges are directed against each other;
wherein the male coupling tubular member (40) upon being received inside the female coupling tubular member (41), the first retaining tab (42) and the second retaining tab (43) of the male coupling tubular member (40) pass below the surrounding wall of the female coupling tubular member (41) and are momentarily flexed until the retaining edge of each retaining tab (42, 43), reaches the edge of the rectangular opening of the female coupling tubular member (41) so that subsequently, the two retaining tabs (42, 43) return to their normal position, in such a way that the retaining edges make contact with the edge of the rectangular opening of the female coupling member (41) thus completing the attachment and securing of the male coupling member (40) and the female coupling member (41);
wherein the means for pressing the retaining tabs (42,43) of the male coupling member (40) comprise a rectangular-shaped tab (44), depending on the surrounding wall of the female coupling member (41) and having a longitudinal axis parallel to a longitudinal axis of the female coupling member (41). Said rectangular-shaped tab (44) allows a user to exert a force on the upper surface, of each retaining tab (42,43), in such a way that the lower surface of the rectangular-shaped tab (44), presses each retaining tab (42,43), in order to momentarily flex both retaining tabs (42,43) thus allowing the retaining edge of both retaining tabs (42,43) to pass to a different plane regarding the edge of the rectangular opening of the female coupling member (41), which allows the user to pull the male coupling member (40) regarding the female coupling member (41) thus passing the two retaining tabs (42,43) below the surrounding wall of the female coupling member (41) thereby allowing to decouple the male coupling member (40) of the female coupling member (41).

Figure 8 shows a seventh embodiment similar to the sixth embodiment shown in Figure 7, with the difference that the means for pressing the retaining tabs (47,48) of the male coupling member (49) comprise a rectangular-shaped tab (45), depending on the surrounding wall of the female coupling member (46) and having a longitudinal axis oriented perpendicular to the longitudinal axis of the female coupling member (46), that is, said rectangular-shaped tab (45) is cross sectionally arranged in the female coupling member (46). Said rectangular-shaped tab (45) allows a user to exert a force on the upper surface of each retaining tab (47,48), in such a way that the lower surface of the rectangular-shaped tab (45), presses each retaining tab (47,48), in order to momentarily flex both retaining tabs (47,48) thus allowing the retaining edge of both retaining tabs (47,48) to pass to a different plane regarding the edge of the rectangular opening of the female coupling member (46), which allows the user to pull the male coupling member (49) regarding the female coupling member (46) thus passing the two retaining tabs (47,48) below the surrounding wall of the female coupling member (46) thereby allowing to decouple the male coupling member (49) of the female coupling member (46).

Figure 9 shows an eighth embodiment of the invention, comprising:
a male coupling tubular member (50) having: a surrounding wall, a longitudinal axis, a circular-shaped cross section, a first end (D) and a second end (S). Said male coupling tubular member (50) including a T-shaped retaining tab (51) in the surrounding wall close to the first end (F), having a longitudinal axis parallel to the longitudinal axis of the male coupling member (50) and directed to the second end (S). Said retaining tab (51) having a first elongated longitudinal section (52) and a second quadrangular cross section (53) which depends on the first elongated longitudinal section (52), said second quadrangular cross section (53) has a retaining edge (54) directed towards the second end (S) of the male coupling member (50) and raised at an angle on the surface of the surrounding wall of the male coupling tubular member (50), said male coupling tubular member (50) including an elongated groove (not shown) on an outer surface of the surrounding wall, starting at the first end (F) of the male coupling tubular member (50) and having a length at least similar to the length of the female coupling member (55);
a female coupling tubular member (55) having: a longitudinal axis, a circular-shaped cross section, a first open end (56) and a second closed end (57). Said female coupling tubular member (55) having a rectangular opening (58) formed in the surrounding wall of the female coupling tubular member (55) and means for pushing the retaining tab (51) of the male coupling tubular member (50) comprising a tab (59) having a longitudinal axis parallel to the longitudinal axis of the female coupling tubular member (55), an upper surface and a lower surface, wherein the end of said tab (59) has a protrusion (60) located in the lower wall of the female coupling member (55); said female coupling tubular member (55) having an elongated guide member (C) on an inner surface of the surrounding wall which starts at the second closed end (57) of the female coupling tubular member (55) and extending throughout the length of the female coupling tubular member (55);
wherein the cross-sectional size of the female coupling tubular member (55) allows the male coupling tubular member (50) to be tightly received therein.
wherein the male coupling tubular member (50) upon being received in the female coupling tubular member (55) through the open end (56), the retaining tab (51) momentarily flexes until the retaining edge (54) reaches the edge of the rectangular opening (58) of the female coupling tubular member (55) thus allowing the retaining tab (51) to return to its normal position in such a way that it is retained by the edge of the rectangular opening (58), thus completing the attachment and securing of both tubular coupling members;
wherein the flange (59) of the means for pushing the retaining tab (51) of the male coupling tubular member (50) allows exerting a force towards the upper surface of the retaining tab (51), which pushes the retaining tab (51) to momentarily flex it, allowing the retaining edge (54) to separate from the edge of the rectangular opening (58), and thus pulling the male coupling tubular member (50) carrying out the separation of the male coupling tubular member (50) outside the female coupling tubular member (55).
wherein the elongated guide member (C) of the female coupling tubular member (55) is received in an elongated groove (not shown) of the male coupling tubular member (50) thereby ensuring that the tubular coupling members are joined in a correct arrangement, with the retaining tab (51) correctly located regarding the rectangular opening (58) and not allowing the attachment of the tubular members in another arrangement when bumping one edge of a wall of the first end (D) of the male coupling tubular member (50) with said elongated guide member (C).

Figure 10 shows a ninth embodiment of the invention comprising:
a male coupling tubular member (61) having an oval-shaped cross section, and a longitudinal axis, comprising: a first end (66) a second end (67); a first side wall (64); a second side wall (65); a first longitudinal wall (62) and a second longitudinal wall (63); a retaining tab (68) formed in the first longitudinal wall (62) close to its first end (66) and oriented towards the second end (67) of the male coupling tubular member (61), said retaining tab (68) having a longitudinal axis which is oriented parallel to the longitudinal axis of the male coupling tubular member (61), and a retaining edge (69) and wherein said retaining tab (68) is raised at an angle directed upwardly from the surface of the first longitudinal wall (62). Said male coupling tubular member (61) further including a guiding groove (F) which starts at the first end (66) of the second longitudinal wall (63);
a female coupling tubular member (70) having an oval-shaped cross section and a longitudinal axis, comprising: a first open end (72); a second closed end (71); a first side wall (73) and a second side wall (74); a first longitudinal wall (77); a second longitudinal wall (78); a rectangular opening formed in the first longitudinal wall (77) and means for pressing the retaining tab (68) of the male coupling member (61) comprising a tab (75) which directly depends on the first longitudinal wall (77) having a longitudinal axis parallel to the longitudinal axis of the female coupling tubular member (70) and being directed towards the open end (72), said tab (75) having an upper surface and a lower surface, wherein said lower surface has a protrusion (76) located on the rectangular opening which can pass through said rectangular opening, said female coupling tubular member (70) having a guide protrusion (E) which starts at the second closed end (71) of the female coupling tubular member (70) having a length equivalent to the guiding groove (F);
wherein the male coupling member (61) upon being received inside the female coupling tubular member (70) through its open end (72), the retaining tab (68) momentarily flexes until the retaining edge (69) reaches the edge of the rectangular opening of the female coupling tubular member (70) thus allowing the retaining tab (68) to return to its normal position in such a way that it is retained by the edge of the rectangular opening, thus completing the attachment and securing of both members;
wherein the guide protrusion (E) of the female coupling tubular member (70) is received in the guiding groove (F), thereby ensuring that the tubular coupling members are joined in a correct arrangement, with the retaining tab (69) correctly located regarding the rectangular opening and not allowing the attachment of the tubular members in another arrangement when bumping one edge of a wall of the first end (66) of the male coupling tubular member (61) with said guide protrusion (E).
wherein the tab (75) of the means for pressing the retaining tab (68) allows exerting a force towards the upper surface of the retaining tab (68) by means of the protrusion (76), which pushes the retaining tab (68) to momentarily flex it, allowing the retaining edge (69) to separate from the edge of the rectangular opening, and thus pulling the male coupling tubular member (61) carrying out the separation of the male coupling tubular member (61) outside the female coupling tubular member (70).

Figure 11 shows a tenth embodiment of the invention comprising:
a male coupling tubular member (79) having a rectangular-shaped cross section, and a longitudinal axis, comprising: a first end (84) a second end (85); a first side wall (82); a second side wall (83); a first longitudinal wall (80) and a second longitudinal wall (81); a retaining tab (86) formed in the first longitudinal wall (80) close to its first end (84) and oriented towards the second end (85) of the male coupling tubular member (79), said retaining tab (68) having a longitudinal axis which is oriented parallel to the longitudinal axis of the male coupling tubular member (79), and a retaining edge (87) and wherein said retaining tab (86) is raised at an angle directed upwardly from the surface of the first longitudinal wall (80). Said male coupling tubular member (79) further including a guiding groove (H) which starts at the first end (84) of the second longitudinal wall (81);
a female coupling tubular member (88) having a rectangular-shaped cross section and a longitudinal axis, comprising: a first open end (93); a second closed end (92); a first side wall (91) and a second side wall (96); a first longitudinal wall (89); a second longitudinal wall (90); a rectangular opening formed in the first longitudinal wall (89) and means for pressing the retaining tab (86) of the male coupling member (79) comprising a tab (94) which directly depends on the first longitudinal wall (89) having a longitudinal axis parallel to the longitudinal axis of the female coupling tubular member (88) and being directed towards the open end (93), said tab (94) having an upper surface and a lower surface, wherein said lower surface has a protrusion (95) located on the rectangular opening which can pass through said rectangular opening; said female coupling tubular member (88) having a guide protrusion (G) which starts at the second closed end (92) of the female coupling tubular member (88) having a length equivalent to the guiding groove (H);
wherein the male coupling member (79) upon being received inside the female coupling tubular member (88) through its open end (93), the retaining tab (86) momentarily flexes until the retaining edge (87) reaches the edge of the rectangular opening of the female coupling tubular member (88) thus allowing the retaining tab (86) to return to its normal position in such a way that it is retained by the edge of the rectangular opening, thus completing the attachment and securing of both members;
wherein the guide protrusion (G) of the female coupling tubular member (88) is received in the guiding groove (H), thereby ensuring that the tubular coupling members are joined in a correct arrangement, with the retaining tab (86) correctly located regarding the rectangular opening and not allowing the attachment of the tubular members in another arrangement when bumping one edge of a wall of the first end (84) of the male coupling tubular member (79) with said guide protrusion (G);
wherein the tab (94) of the means for pressing the retaining tab (86) allows exerting a force towards the upper surface of the retaining tab (86) by means of the protrusion (95), which pushes the retaining tab (86) to momentarily flex it, allowing the retaining edge (87) to separate from the edge of the rectangular opening, and thus pulling the male coupling tubular member (79) carrying out the separation of the male coupling tubular member (79) outside the female coupling tubular member (88).

Finally, it should be understood that the releasable coupling system of the present invention is not limited to the embodiments described above and that those skilled in the art will be enabled, by the teachings herein established, to make changes in the releasable coupling system, of the present invention, which will fall within the true scope of the invention, the scope of which will be exclusively established by the following claims.

## Claims

1. A releasable coupling system among coupling members comprising:
a male coupling member having: at least one wall having a coupling section, one or more retaining tabs, each formed on the coupling surface of the at least one wall, each retaining tab raised at an angle regarding the surface of the coupling section and having a retaining edge;
a female coupling member having: at least one wall; means for receiving and coupling the coupling section of the at least one wall of the male coupling member; at least one space formed in the at least one wall, each having a contact edge, and one or more means for exerting a force on a retaining tab associated with each retaining tab, each means for exerting a force on a retaining tab depending on the at least one wall of the female coupling member and located on a respective recess or space;
wherein the male coupling member is received by the female coupling member in the means for receiving and coupling the coupling section of the at least one wall of the male coupling member;
wherein each retaining tab of the male coupling member passes momentarily in a tight and flexed manner, below the at least one wall of the female coupling member, until the retaining edge of said tab reaches the contact edge of a recess or space of the female coupling member and said retaining tab returns to a normal position without flexing, in such a way that the retaining edge is retained by the contact edge of the recess or space, thereby joining the male coupling member to the female coupling member; and
wherein each means for exerting a force on the retaining tab, momentarily allows pushing and flexing a corresponding retaining tab, thereby allowing said retaining tab to pass below the at least one wall of the female coupling member and to decouple the male coupling member from the female coupling member when pulled.

2. A releasable coupling system according to claim 1, wherein the means for receiving and coupling the coupling section of the at least one wall of the male coupling member comprise a housing.

3. A releasable coupling system according to claim 1, wherein the means for receiving and coupling the coupling section of the at least one wall of the male coupling member comprise a groove.

4. A releasable coupling system according to claim 1, wherein the male coupling member and the female coupling member have polygonal-shaped cross section.

5. A releasable coupling system according to claim 1, wherein the male coupling member and the female coupling member comprise flat members.

6. A releasable coupling system according to claim 1, wherein the means for exerting a force on a retaining tab comprise a tab formed in the at least one wall.

7. A releasable coupling system according to claim 1, wherein the means for exerting a force on a retaining tab comprise mechanical means depending on the at least one wall.

8. A releasable coupling system according to claim 1, wherein the male coupling member has a guiding groove and the female coupling member has a guide protrusion, wherein the guide protrusion of the female coupling tubular member is received in the guiding groove thereby ensuring that the tubular coupling members are joined in a correct arrangement.

9. A releasable coupling system according to claim 1, comprising:
a male coupling tubular member having polygonal-shaped cross section, and a longitudinal axis, comprising: a first end; a second end; a retaining tab formed in a first wall close to its first end and oriented towards the second end of the male coupling tubular member, said retaining tab having a longitudinal axis which is oriented parallel to the longitudinal axis of the male coupling tubular member and a retaining edge and wherein said retaining tab is raised at an angle directed upwardly from the surface of the first wall; said male coupling tubular member further including a guiding groove which starts at the first end of a second wall;
a female coupling tubular member having polygonal-shaped cross section and a longitudinal axis, comprising: a first open end; a second closed end; a rectangular opening formed in a first wall and means for pressing the retaining tab of the male coupling member comprising a tab which directly depends on the first wall, having a longitudinal axis parallel to the longitudinal axis of the female coupling tubular member and being directed towards the open end, said tab having an upper surface and a lower surface, wherein said lower surface has a protrusion located on the rectangular opening which can pass through said rectangular opening; said female coupling tubular member having a guide protrusion in a second wall which starts at the second closed end of the female coupling tubular member said protrusion having a length equivalent to the guiding groove;
wherein the male coupling member upon being received inside the female coupling tubular member through its open end, the retaining tab momentarily flexes until the retaining edge reaches the edge of the rectangular opening of the female coupling tubular member thus allowing the retaining tab to return to its normal position in such a way that it is retained by the edge of the rectangular opening, thus completing the attachment and securing of both coupling members;
wherein the guide protrusion of the female coupling tubular member is received in the guiding groove, thereby ensuring that the tubular coupling members are joined in a correct arrangement, with the retaining tab correctly located regarding the rectangular opening and not allowing the attachment of the tubular members in another arrangement when bumping one edge of a wall of the first end of the male coupling tubular member with said guide protrusion;
wherein the tab of the means for pressing the retaining tab allows exerting a force towards the upper surface of the retaining tab by means of the protrusion, which pushes the retaining tab to momentarily flex it, allowing the retaining edge to separate from the edge of the rectangular opening, and thus pulling the male coupling tubular member carrying out the separation of the male coupling tubular member outside the tubular female coupling member.

10. A releasable coupling system according to claim 1, comprising:
a flat male coupling member, having: a longitudinal axis, a wall, a retaining tab having a retaining edge, said retaining tab formed in said wall and raised at an angle on the wall; said retaining tab having a longitudinal axis parallel to the longitudinal axis of the male coupling member;
a flat female coupling member, having: a longitudinal axis, a first surface, a second surface, a flat cavity between both surfaces to receive the flat male coupling member; a groove formed in the first surface, and means for pushing the retaining tab of the male coupling member, comprising a tab which depends on the first surface, having a longitudinal axis parallel to the longitudinal axis of the female coupling member, said tab having an upper surface and a lower surface, said lower surface having a protrusion located directly on the groove and capable of passing through said groove;
wherein the male coupling member upon being received within the flat cavity of the female coupling member, the retaining tab of the male coupling member passes tightly below the first surface of the female coupling member, momentarily flexing until the retaining edge of the retaining tab reaches the edge of the groove of the female coupling member and said retaining tab returns to its normal position, so that the retaining edge makes contact with the edge of the recessed or hollow area of the female coupling member, thus completing the attachment of the male coupling member with the female coupling member;
wherein the protrusion of the tab of the means for pressing the retaining tab allows exerting a force towards the upper surface of the retaining tab by means of the protrusion, which pushes the retaining tab to momentarily flex it, allowing the retaining edge to separate from the edge of the groove of the female coupling member, and thus pulling the male coupling member carrying out the separation of the male coupling member outside the female coupling member.

11. A releasable coupling system according to claim 1, wherein two or more coupling members can be joined to a central connecting element to form a "connection center" for two or more additional coupling members.
